Europäisches Patentamt

European Patent Office

Office européen des brevets

(19)

(11) Veröffentlichungsnummer: **0 197 330 B1**

(12) # EUROPÄISCHE PATENTSCHRIFT

(45) Veröffentlichungstag der Patentschrift: **16.10.91**

(51) Int. Cl.⁵: **H05B 7/148**

(21) Anmeldenummer: **86103146.6**

(22) Anmeldetag: **08.03.86**

(54) **Verfahren zur Elektrodenregelung in einem Ofen mit frei brennendem Lichtbogen.**

(30) Priorität: **03.04.85 DE 3512178**

(43) Veröffentlichungstag der Anmeldung:
**15.10.86 Patentblatt 86/42**

(45) Bekanntmachung des Hinweises auf die
Patenterteilung:
**16.10.91 Patentblatt 91/42**

(84) Benannte Vertragsstaaten:
**AT FR GB SE**

(56) Entgegenhaltungen:
**DE-A- 2 405 252**
**DE-A- 2 437 887**
**DE-A- 2 440 960**
**US-A- 3 662 075**

(73) Patentinhaber: **MANNESMANN Aktiengesellschaft**
**Mannesmannufer 2**
**W-4000 Düsseldorf 1(DE)**

(72) Erfinder: **Bretthauer, Karlheinz, Prof. Dr.**
**Berliner Strasse 45**
**W-3392 Clausthal-Zellerfeld(DE)**
Erfinder: **Obenauf, Hans-Dietrich**
**Rollstrasse 48**
**W-3392 Clausthal-Zellerfeld(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

**Beschreibung**

Die Erfindung betrifft ein Verfahren zur Elektrodenregelung gemäß dem Obergriff des Anspruchs 1.

Herkömmliche Elektrodenregelungen für Lichtbogenöfen verwenden vorwiegend die sogenannte Impedanzregelung, d.h., daß für jede Elektrode der Quotient der zwischen Hochstrombahn und Badsternpunkt gemessenen Spannung mit dem Strom der betreffenden Hochstrombahn gebildet wird. Dieser Meßwert ist dann die Istgröße der Impedanzregelung. Abgesehen davon, daß diese Regelungsart nur bei nicht zu großen Abweichungen aus Normalbetriebszuständen in der Tendenz richtig auf den Elektrodenhöhenstand einwirkt, hat sie noch folgende Nachteile:

Die auf einer Hochstrombahn sich vollziehenden Veränderungen, z.B. durch Elektrodenverstellung, wirken sich auf die Impedanzmeßgrößen der beiden anderen Elektroden aus und veranlassen diese trotz der für den gewünschten Endzustand richtigen Elektrodenstellung zu einer Reaktionsbewegung, die im Verlaufe des weiteren Regelvorganges zurückgenommen wird. Die drei Regelkreise sind nicht entkoppelt.

Ferner ist die Meßgröße (Impedanz) kein zuverlässiges Maß für die Lichtbogenlängen Trotz gleicher Impedanz-Sollwerte kann es zu erheblichen Unterschieden zwischen den drei Lichtbogenlängen kommen.

Schließlich kann es in extremen Situationen, z.B. Berührung einer Elektrode mit dem Bad (Schrott) zu unerwünschten Elektrodenbewegungen mit Schadensfolge kommen, z.B., wenn eine mit dem Schrott in Berührung stehende Elektrode durch derartige Fehlreaktionen weiter abgesenkt wird und dadurch ein Elektrodenbruch hervorgerufen wird.

Die als nachteilig genannten Erscheinungen können vermieden werden, wenn eine Meßgröße verwendet wird, die ein möglichst gutes Abbild der gewünschten Stellgröße ist, nämlich der Lichtbogenlänge, einstellbar durch den Höhenstand der Elektrode über dem Bad.

Aus der DE-OS 24 40 960 kann der Fachmann Fig. 5 und dem zugehörigen Text entnehmen, daß in bestimmten Bereichen des Lichtbogenstroms eine nur geringe Abhängigkeit der Lichtbogenspannung vom Strom unterstellt werden darf. Dies ist inzwischen durch die Dissertation von Werner Höke "Der Spannungsbedarf des stationären Hochstromlichtbogens in einem Lichtbogenofen für die Stahlherstellung" vom 29.07.1980 durch umfangreiche theoretische Untersuchungen erhärtet worden und das Ergebnis dort in Bild 18 wiedergegeben. Im Bereich zwischen etwa 15 - 80 kA wird die weitgehende Konstanz der Lichtbogenspannung bestätigt. Man darf deshalb davon ausgehen, daß in mittleren und großen Lichtbogenöfen mit Stromstärken bis zu etwa 70 kA effektiv der Spannungsabfall des Lichtbogens bereits kurz nach dem Nulldurchgang des Stromes einen nahezu konstanten Wert annimmt. Dies wird von zahlreichen in der Literatur veröffentlichten Oszillogrammen des Lichtbogenspannungsverlaufs bestätigt. Um einerseits die drei Hochstromkreise bezüglich der Elektrodenregelung zu entkoppeln und um andererseits ungenaue oder fehlerhafte Reaktionen zu vermeiden, ist es daher sinnvoll, die Lichtbogenspannung als die unmittelbare Regelgröße für die Elektrodenregelung zu verwenden, zumal sich auch Veränderungen des Abstandes Elektrode-Bad eindeutig im Vorzeichen der Veränderung der mittleren Lichtbogenspannung widerspiegeln.

Die Lichtbogenspannung kann z.B. entsprechend der in der DE-AS 24 05 252 in Verbindung mit der in der DE-OS 24 37 887 gegebenen Lehre meßtechnisch bestimmt werden. Mit diesem Meßverfahren könnte statt der eingangs beschriebenen Impedanz als Regelgröße der Lichtbogenwiderstand (Quotient von Lichtbogenspannung und Lichtbogenstrom) verwendet werden. Dies hätte zunächst einmal folgenden Vorteil. Beim Atsenken aller Elektroden im stromlosen Zustand sind für diejenige Elektrode, die als erste den Schrott berührt, die gemessene Lichtbogenspannung und der gemessene Lichtbogenstrom Null. Das ergibt einen unbestimmten Quotienten und damit richtig keine Aussteuerung der Elektrodenregelung, d.h. einen Stillstand der Elektrode.

Im Fall einer reinen Spannungsregelung würde dieser Betriebszustand jedoch zu einem Auf- und Abtanzen der das Bad als erste berührenden Elektrode führen. Im abgehobenen Zustand ist die wirksame Netzsternspannung größer als der Sollwert der Lichtbogenspannung, bei Berührung des Bades ist es umgekehrt.

Somit ist es Aufgabe der vorliegenden Erfindung, ein Verfahren mit einer optimalen Elektrodenregelung zu schaffen, das die Nachteile oben beschriebener Verfahren vermeidet und auch den unerwünschten Lückbetrieb verhindert.

Diese Aufgabe wird gelöst durch die kennzeichnenden Merkmale des Anspruchs 1. Nach dem erfindungsgemäßen Verfahren wird der Lichtbogenspannungssollwert dem trapezähnlichen Halbwellenverlauf der Lichtbogenspannung nachgebildet, wobei die "Trapezflanken" proportional dem Lichtbogenstrom verlaufen und die "Trapezkuppe" von einem Sollwert für die Lichtbogenlänge gebildet wird. Der Halbwellenverlauf des Lichtbogenspannungssollwerts wird also vom jeweils kleineren Momentanwert der genannten Größen gebildet.

Nach der Erfindung verwendet man also für die Lichtbogenspannungsregelung als Spannungssollwert nicht eine Gleichspannung, wie es sonst in der Regelungstechnik für Sollwerte üblich ist, sondern einen der Halbwellenform der tatsächlichen Lichtbogenspannung angenäherten Sollwertverlauf. Die "Trapezflanken" werden proportional dem tatsächlichen Lichtbogenstrom gebildet. Lediglich die "Trapezkuppe" wird in ihrer Höhe von einem Sollwert bestimmt, der als Gleichspannung entweder von Hand oder von einer Programmsteuerung oder als Führungsgröße aus dem Prozeß gebildet wird. Die kleinere der beiden Größen "Stromproportionale Spannung" und "Kuppensollwert" ergibt für jeden Zeitpunkt den Lichtbogenspannungs-Sollwert.

Dieses Verfahren besitzt gegenüber den nach dem Stand der Technik bekannten Verfahren folgende Vorteile.

Zum einen ergibt sich in dem Extremfall der stromlos auf dem Bad aufstehenden Elektrode kein Spannungssollwert. Da der Kuppensollwert nicht erreicht wird, ist dieser unwirksam. Die Elektrodenregelung bleibt stehen; eine unerwünschte Elektrodenbewegung wird somit vermieden.

Weiterhin ist der aus den Flanken vom Lichtbogenstrom und vom Kuppensollwert gebildete Gesamtsollwert der Lichtbogenspannung dem tatsächlichen Verlauf des Spannungssollwertes so weitgehend angepaßt, daß auf Glättungsglieder im Lichtbogenspannungs-Regelkreis, z.B. für die Istwertbildung, verzichtet werden kann und damit optimale regelungsdynamische Voraussetzungen gegeben sind.

Den Lichtbogenstrom selbst zur Bildung der Flanke des Sollwertes für die Lichtbogenspannung zu verwenden, ist auch auf Grund folgender Erkenntnis sinnvoll:

Es ist aus Messungen bekannt, daß sich die Lichtbogenspannungs-Halbwelle um so mehr von einer trapezähnlichen Form in Richtung auf eine sinusähnliche Form abwandelt, je größer das Verhältnis der Lichtbogenspannung bzw. Lichtbogenlänge zur treibenden Netzspannung ist; denn bei relativ kleiner Netzspannung ist auch der Strom relativ klein und dementsprechend die Spannungsabfälle auf den Zuleitungen und im Transformator, die bei größeren Strömen einen wesentlichen Teil der Netzspannung beanspruchen. Als Folge davon wird sowohl für den Strom als auch für die Lichtbogenspannung die Steilheit der Änderungen, also insbesondere der Wechsel zwischen negativen und positiven Werten und umgekehrt, geringer.

Durch Festlegung einer von den jeweiligen Ofendaten abhängigen Zeitspanne nach jedem Nulldurchgang des Stromes, ab der die vom Stromistwert vorgegebene Trapezflanke nicht mehr weiter ansteigen kann, kann auch der unerwünschte Lückbetrieb verhindert werden.

Lücken entsteht bekanntlich bei zu langen Lichtbögen, d.h. zu großen Lichtbogenspannungen im Verhältnis zur Netzspannung. Wegen der kleinen treibenden Spannung erreicht der absinkende Strom bereits zu einem Zeitpunkt den Wert Null, bevor die gegenpolige Netzspannung ihn in Gegenrichtung zu zünden in der Lage ist; der Strom lückt. Der Strom hat starke Oberschwingungen und neigt zu starken Amplitudenschwankungen; beides ist im Hinblick auf das speisende Netz unerwünscht. Da nach dem erfindungsgemäßen Verfahren die Elektrodenregelung einen kürzeren Lichtbogen einstellt als er vom Kuppensollwert her gefordert wird, wird das Lücken automatisch verhindert.

Falls in einem erweiterten Regelkonzept die Lichtbogenspannungsregelung einem übergeordneten Regelkreis einer anderen Regelgröße unterlagert ist, z.B. einem überlagerten Stromregelkreis, dann erfolgt der Eingriff des überlagerten Regelreises stets ausschließlich an der Sollwertkuppe, wobei, wie gesagt, der Spannungssollwert stets den niedrigsten Kuppenwert aller Einflußgrößen hat.

Der Grenzwert kann für jede Halbwelle des Sollwerts als Gleichspannungswert (Kuppenwert) vorgegeben werden (Anspruch 2) und ggf. für alle Halbwellen nur eine Polarität besitzen (Anspruch 3).

Im praktischen Ofenbetrieb gibt es auch eine sinnvolle Mindestlänge für die Höhe der Elektrodenspitze über dem Bad mit einer entsprechenden Lichtbogenlänge, die nicht unterschritten werden sollte, unter anderem weil Badbewegungen sonst starke Schwankungen der Lichtbogenlänge mit entsprechenden Amplitudenschwankungen von Lichtbogenspannung und -strom hervorrufen würden. Es ist deshalb sinnvoll, daß aus dem Prozeß kommende Führungsgrößen für die Lichtbogenlänge einen vom jeweiligen Ofen abhängigen Mindestwert nicht unterschreiten (Anspruch 4).

Nach einer Weiterentwicklung des vorbeschriebenen Regelverfahrens wird der Kuppenwert als Führungsgröße aus dem Prozeß, d.h. aus einer aus dem Prozeß abgeleiteten Größe wie der Bogenspannung, dem Verschleiß oder dem Strom gewonnen oder von einem Programm vorgegeben. Dies bedeutet, daß der jeweils zu wählende Grenzwert sich ggf. auch zeitlich ändert.

Ferner wird bevorzugt der obere Grenzwert von demjenigen momentanen stromproportionalen Flankenwert gebildet, der sich nach Ablauf einer vorgebbaren Zeit nach dem Nulldurchgang des Stroms gebildet hat, sofern dieser Flankenwert betragsmäßig kleiner ist als der Kuppenwert (Anspruch 6).

Ausführungsbeispiele nach der Erfindung sind in den Zeichnungen dargestellt. Es zeigen

Fig. 1a, c eine schematische Darstellung des Lichtbogenstromes,

Fig. 1b, d eine schematische Darstellung des Sollwerts für die Lichtbogenspannung, jeweils für einen alternierenden (a, b) und einen gleichgerichteten Stromverlauf (c, d) und

Fig. 2 eine schematische Darstellung einer Vorrichtung zur Erzeugung des Sollwertes der Lichtbogenspannung.

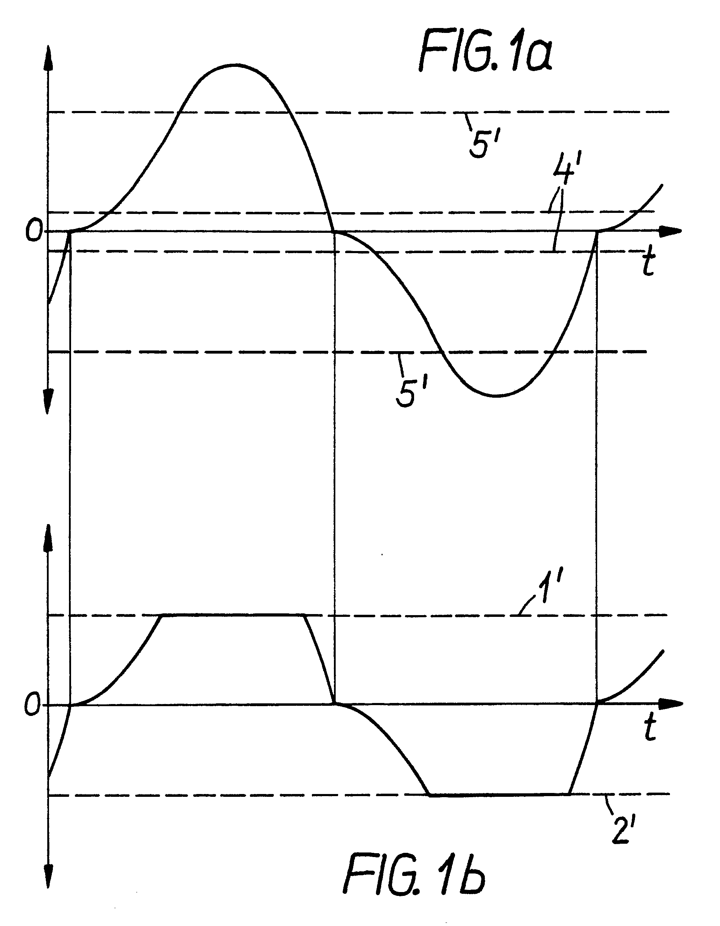

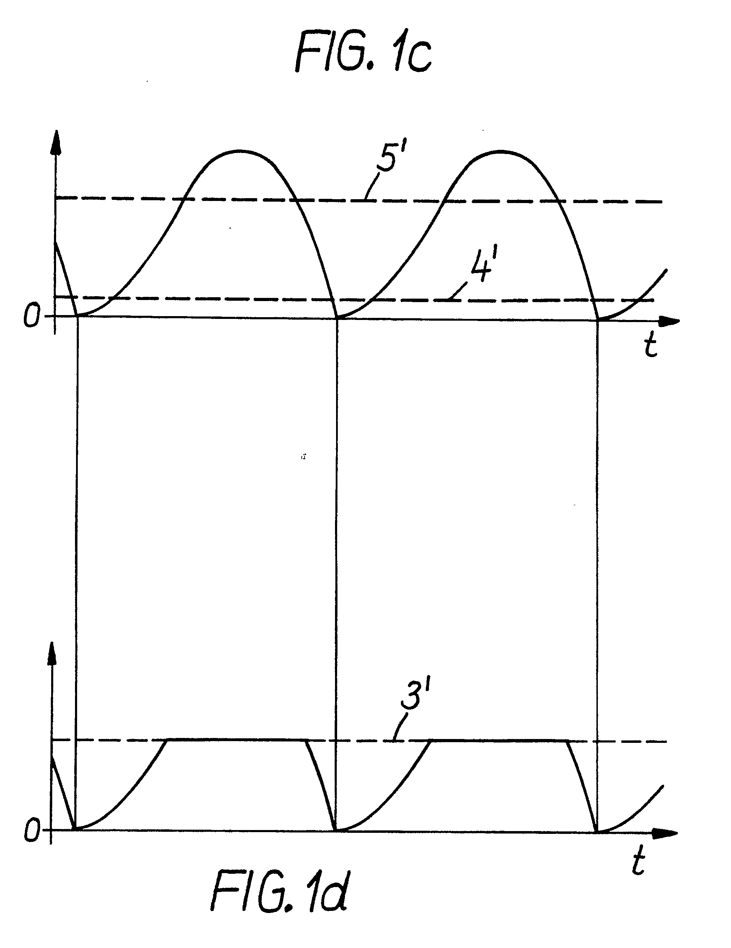

Fig. 1a zeigt den annähernd sinusförmigen Stromverlauf, dem der Sollwert in Fig. 1b "nachgebildet" ist. Die Unterschiede zwischen den beiden Kurven in Fig. 1a, b liegen darin, daß der Spannungssollwert einen, bestimmten oberen wie unteren Grenzwert 1', 2',der in Fig. 1b gestrichelt angedeutet ist, nicht über- bzw. unterschreitet. Diese Grenzwerte liegen betragsmäßig zwischen einer oberen Grenze 5' und einer unteren Grenze 4'. Demgegenüber zeigt Fig. 1d eine entsprechende Sollwertbildung bei gleichgerichtetem Stromverlauf gemäß Fig. 1c. Auch bei dieser Art der Sollwertbildung wird ein oberer Grenzwert 3' nicht überschritten.

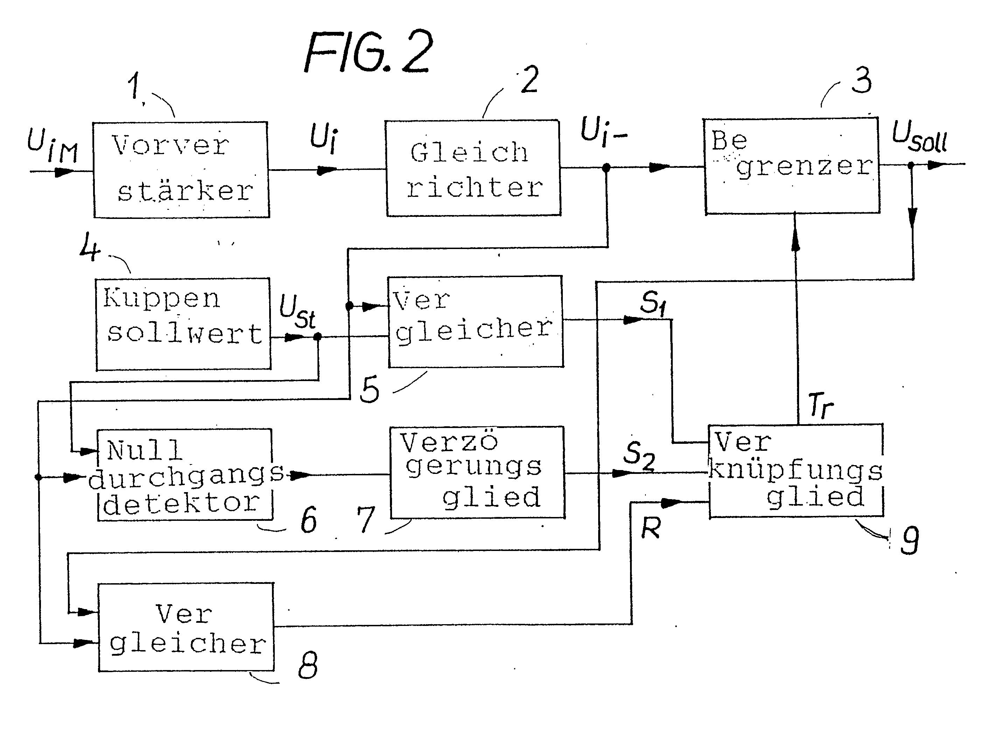

Fig. 2 zeigt anhand eines Blockschaltbildes die Funktion des angemeldeten Verfahrens. Ein dem Lichtbogenstrom proportionaler Spannungswert $U_{iM}$, der mittels nach dem Stand der Technik bekannter Meßsysteme, wie z.B. in der DE-AS 24 05 252 und der DE-OS 24 37 887 beschrieben, ermittelt wird, wird einem Vorverstärker 1 zur Bildung eines Spannungswertes $U_i$ zugeführt. Der im Vorverstärker 1 verstärkte Spannungswert wird anschließend einem Gleichrichter 2 zugeführt. Der gleichgerichtete, Lichtbogenstrom-proportionale Spannungswert $U_i$ wird jeweils einem Begrenzer 3, einem Vergleicher 5 und einem Nulldurchgangsdetektor 6 zugeführt. Der Begrenzer 3 gibt den ihm zugeführten Wert unverändert als Lichtspannungssollwert $U_{Soll}$ weiter, es sei denn, der Begrenzer 3 erhält von der Verknüpfung 9 ein Signal $T_r$, was dann ausgesandt wird, wenn der stromproportionale Spannungssollwert betragsmäßig größer wird als der vorgegebene Kuppensollwert. Der Kuppensollwert wird in einer Sollwertvorgabe 4 als Gleichspannungswert $U_{St}$ gebildet und ebenfalls dem Vergleicher 5 und dem Nulldurchgangsdetektor 6 zugeführt. Der Vergleicher 5 vergleicht den Kuppensollwert $U_{St}$ mit der gleichgerichteten stromproportionalen Spannung $U_i$. Sobald $U_i$ den Wert von $U_{St}$ erreicht, gibt der Vergleicher 5 ein Ausgangssignal $S_1$ an das Verknüpfungsglied 9 weiter, das seinerseits spätestens zu diesem Zeitpunkt über das $T_r$-Signal den Begrenzer 3 veranlaßt, den dort erreichten Wert des $U_i$-Signals so lange festzuhalten, bis dieses Signal den Sollwert $U_{St}$ unterschreitet. Auf diese Weise entsteht der trapezähnliche Sollwert für die Lichtbogenspannun $U_{Soll}$, dessen Kuppenwert der gewünschten Lichtbogenlänge entspricht. Wenn $U_i$ beim Nulldurchgang des Lichtbogenstroms in Lücknähe selbst den Wert Null erreicht, - das Eingangssignal $U_{St}$ dient im Nulldurchgangsdetektor 6 als Hilfssignal zur Erkennung des Lückbeginns -, startet der Nulldurchgangsdetektor 6 über sein Ausgangssignal das Verzögerungsglied 7 mit fest einstellbarer Verzögerungszeit. Nach Ablauf dieser Verzögerungszeit veranlaßt das Verzögerungsglied 7 mitseinem Ausgangssignal $S_2$ das Verknüpfungsglied 9 dazu, mit seinem Ausgangssignal $T_r$ den zu diesem Zeitpunkt erreichten Wert des $U_i$-Signals festzuhalten, sofern dies nicht bereits vorher durch das Signal $S_1$ des Vergleichers 5 geschehen ist. Das jeweils am frühesten auftretende Signal $S_1$ oder $S_2$ veranlaßt somit die Begrenzung des Lichtbogenspannungssollwerts auf den Kuppenwert. Das den Begrenzer 3 auslösende Signal $T_r$ wird von der Verknüpfung 9 zurückgenommen, wenn ein Vergleicher 8 an seinem Ausgang das Rücksetzsignal R an die Verknüpfung 9 abgibt. Der Vergleicher 8 empfängt sowohl den durch Gleichrichter 2 erzeugten Spannungswert $U_i$ als auch das den Begrenzer verlassende Signal $U_{Soll}$. Das Rücksetzsignal R wird jeweils dann an die Verknüpfung 9 abgegeben, wenn am Ende einer Halbperiode das $U_i$-Signal kleiner wird als der begrenzte Wert (Kuppenwert) $U_{Soll}$.

## Patentansprüche

1. Verfahren zur Elektrodenregelung in einem Schmelzofen mit frei brennenden Lichtbögen in Abhängigkeit von den aus den Strangspannungen und über magnetische Spannungsmesser aus Wirk- und Blindspannungsabfällen auf den Hochstromleitungen ermittelten Lichtbogenspannungen, wobei jeder Elektrode ein Lichtbogenspannungsregler zugeordnet ist, dem die gemessene Lichtbogenspannung als Istwert und ein Sollwert der Lichtbogenspannung zugeführt werden, dadurch gekennzeichnet, daß der Sollwert während jeder Halbwelle der Lichtbogenspannung zum einen proportional zum Flankenverlauf des tatsächlichen Lichtbogenstrom (Flankenwert) und zum anderen von einem der gewünschten Lichtbogenlänge entsprechenden Grenzwert (Kuppenwert) gebildet wird, wobei stets der betragsmäßig kleinere Momentanwert des Proportialwertes und des Grenzwertes als Sollwert dem Lichtbogenspannungsregler zugeführt wird.

2. Verfahren nach Anspruch 1, dadurch gekennzeichnet, daß der Grenzwert für jede Halbwelle des Sollwertes (Kuppenwert) als Gleichspannungswert vorgegeben wird.

3. Verfahren nach Ansprüchen 1 und 2, dadurch gekennzeichnet, daß der Sollwert für alle Halbwellen nur eine Polarität besitzt.

4. Verfahren nach Anspruch 2, dadurch gekennzeichnet, daß der Grenzwert (Kuppenwert) eine untere Grenze (4') betragsmäßig nicht unterschreitet.

5. Verfahren nach Anspruch 2, dadurch gekennzeichnet, daß der Grenzwert (Kuppenwert) als Führungsgröße aus dem Prozeß gewonnen oder von einem Programm vorgegeben wird.

6. Verfahren nach Ansprüchen 1 bis 3, dadurch gekennzeichnet, daß der obere Grenzwert (5'), von demjenigen momentanen stromproportionalenwert (Flankenwert) gebildet wird, der sich nach Ablauf einer vorgebbaren Zeit nach dem Nulldurchgang des Stromes gebildet hat, sofern dieser stromproportionalewert (Flankenwert) betragsmäßig kleiner ist als der von einem der gewünschten Lichtbogenlänge entsprechenden Grenzwert (Kuppenwert).

## Claims

1. Method for regulating electrodes in a melting furnace with freely burning arcs according to the arc voltages determined via magnetic voltmeters from the phase voltages and from active and reactive voltage drops on the high-current lines, in which an arc voltage regulator is associated with each electrode and supplied with the measured arc voltage as actual value and a desired value of the arc voltage, characterised in that the desired value is formed during each half-cycle of the arc voltage on the one hand proportionally to the slope of the actual arc current (slope value) and on the other by a limit value (peak value) corresponding to the desired arc length, with the lower instantaneous value of the proportional value and of the limit value always being supplied as desired value to the arc voltage regulator.

2. Method according to claim 1, characterised in that the limit value for each half-cycle of the desired value (peak value) is predetermined as a d.c. voltage value.

3. Method according to claims 1 and 2, characterised in that the desired value for all half-cycles only has one polarity.

4. Method according to claim 2, characterised in that the limit value (peak value) does not fall below a lower limit (4).

5. Method according to claim 2, characterised in that the limit value (peak value) as reference input is obtained from the process or predetermined by a program.

6. Method according to claims 1 to 3, characterised in that the upper limit value (5) is formed by the instantaneous value which is proportional to the current (slope value) and which is formed after a predeterminable time after the current has passed through zero, if this value which is proportional to the current (slope value) is lower than the limit value (peak value) corresponding to the desired arc length.

## Revendications

1. Procédé pour le réglage des électrodes dans un four de fusion à arcs électriques brûlant librement, selon les tensions d'arc détectées par des voltmètres magnétiques sur les lignes pour courant de forte intensité à partir des tensions par phase d'enroulement et des chutes de tensions active et réactive, un régulateur de la tension d'arc étant associé à chaque électrode, auquel la tension d'arc mesurée, en tant que valeur réelle, et une valeur de consigne de la tension d'arc sont adressées, caractérisé en ce que la valeur de consigne est formée, pendant chaque demi-onde de la tension d'arc, d'une part, proportionnellement au tracé du flanc d'impulsion du courant d'arc réel (valeur de flanc) et, d'autre part, par une valeur limite correspondant à la longueur d'arc souhaitée (valeur cime), la valeur instantanée la plus petite de la valeur proportionnelle et de la valeur limite étant toujours adressée au régulateur de la tension d'arc.

2. Procédé selon la revendication 1, caractérisé en ce que la valeur limite pour chaque demi-onde de la valeur de consigne (valeur cime) est prédéfinie comme valeur de tension continue.

3. Procédé selon les revendications 1 et 2, caractérisé en ce que la valeur de consigne pour toutes les demi-ondes ne possède qu'une polarité.

4. Procédé selon la revendication 2, caractérisé en ce que la valeur limite (valeur cime) ne dépasse pas une valeur plancher (4').

5. Procédé selon la revendication 2, caractérisé en ce que la valeur limite (valeur cime) est tirée du procédé en tant que grandeur de référence ou est prédéfinie par un programme.

6. Procédé selon les revendications 1 à 3, caractérisé en ce que la valeur limite supérieure (5') est formée par la valeur instantanée proportionnelle au courant (valeur de flanc) , qui s'est formée après écoulement d'un temps prédéfinissable après le passage par zero du courant, si tant est que cette valeur proportionnelle au courant (valeur de flanc) est plus petite que la valeur limite (valeur cime) correspondant à la longueur d'arc souhaitée.

FIG.1a

FIG. 1b

## FIG. 1c

5'

4'

3'

## FIG. 1d

# FIG. 2